Europäisches Patentamt

European Patent Office

Office européen des brevets

(19)

(11) **EP 0 977 976 B1**

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(21) Anmeldenummer: **98931983.5**

(22) Anmeldetag: **27.04.1998**

(51) Int Cl.7: **G01K 17/16**, F24D 19/10

(86) Internationale Anmeldenummer:
**PCT/DE98/01133**

(87) Internationale Veröffentlichungsnummer:
**WO 98/49532 (05.11.1998 Gazette 1998/44)**

(54) **WÄRMEMENGENMESSER FÜR FLUIDE STRÖMUNGEN UND VERFAHREN ZUR BESTIMMUNG DER WÄRMEMENGE**

CALORIMETER FOR FLUID FLOWS AND A METHOD FOR MONITORING THE AMOUNT OF HEAT

CALORIMETRE POUR COURANTS FLUIDES ET METHODE POUR DETERMINER LA QUANTITE DE CHALEUR

(84) Benannte Vertragsstaaten:
**AT BE CH CY DE DK ES FI FR GB GR IE IT LI LU MC NL PT SE**

(30) Priorität: **26.04.1997 DE 19717671**
**09.09.1997 DE 19739367**

(43) Veröffentlichungstag der Anmeldung:
**09.02.2000 Patentblatt 2000/06**

(73) Patentinhaber: **Böhringer, Volker**
**75417 Mühlacker (DE)**

(72) Erfinder: **Böhringer, Volker**
**75417 Mühlacker (DE)**

(56) Entgegenhaltungen:
**EP-A- 0 676 682**      **DE-A- 2 836 930**
**US-A- 4 224 825**      **US-A- 4 332 164**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Stand der Technik

Die Erfindung geht aus von einem Verfahren nach der Gattung des Hauptanspruchs. Üblicherweise werden die in strömenden Fluiden geförderten oder einem Wärmetauscher zugeführten oder entnommenen Wärmemengen als endliche Summe von Produkten eines Volumenstroms und einer Temperaturdifferenz, gewichtet mit der spezifischen Wärmekapazität des Fluids gebildet.

Nach dem Stand der Technik wird dieser Volumenstrom mit Hilfe eines Volumenstromgebers gemessen, der diesen Volumenstrom in Impulse pro Volumeneinheit umwandelt (kalibriert). Diese Impulse werden einer Vorrichtung zugeführt, die diesen Volumenstrom einer im Fluid gemessenen Temperatur zuordnet und daraus die geförderte, absolute Wärmemenge oder die an einem Wärmetauscher zugeführte oder entnommene Wärmemenge bestimmt. Diese Wärmemengen werden über einen Zeitabschnitt addiert. Die US-Patentschriften US 4 224 825 und US 4 332 164 zeigen derartige Einrichtungen, bei denen in die Fluidleitung eingebaute Volumenstromgeber verwendet werden, die den Volumenstrom repräsentierende Impulse abgeben.

Nachteilig an diesem Verfahren ist der systematische Fehler der Wärmemengenmessung bei Anlagen mit im wesentlichen diskontinuierlichem Volumenstrom und folglich inhomogener Temperaturverteilung in demselben. Die Temperaturmessung erfolgt nach dem bekannten Verfahren in verschiedenen Temperaturbereichen des Volumenstroms die unterschiedlichen Leitungsabschnitten zugeordnet werden können. Diese Temperaturfassung ist jedoch beim diskontinuierlichen Betrieb der Fördereinrichtung zufallsverteilt; d. h. in Abhängigkeit von der Phasenlage und Auflösung des Impulsgebers des Volumenstromgebers bei Beginn einer Messung fallen unterschiedlich viele Zyklen in einen Temperaturbereich; es kommt zu einer undefinierten Abweichung des gemessenen Wertes vom tatsächlichen Wert (Integral).

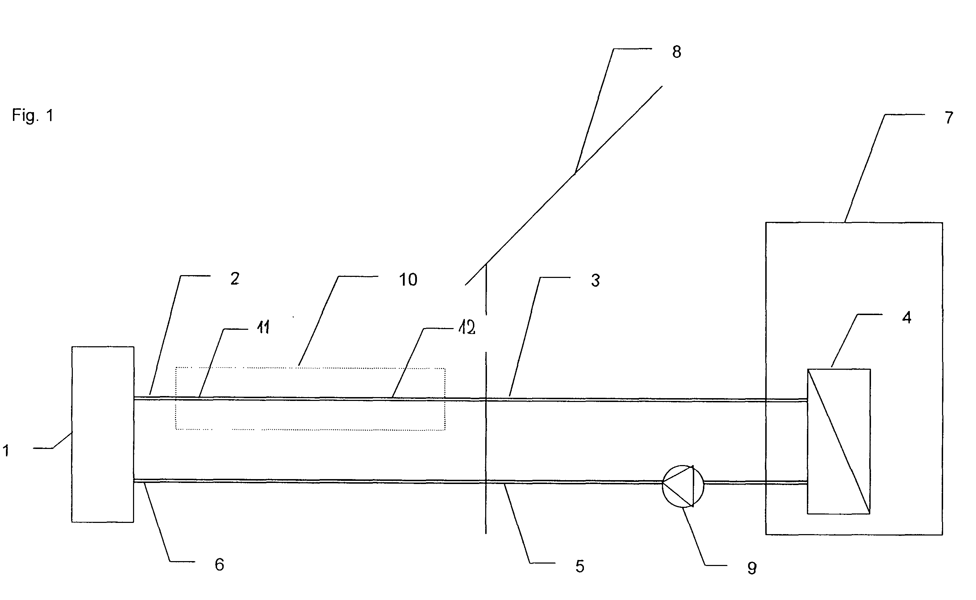

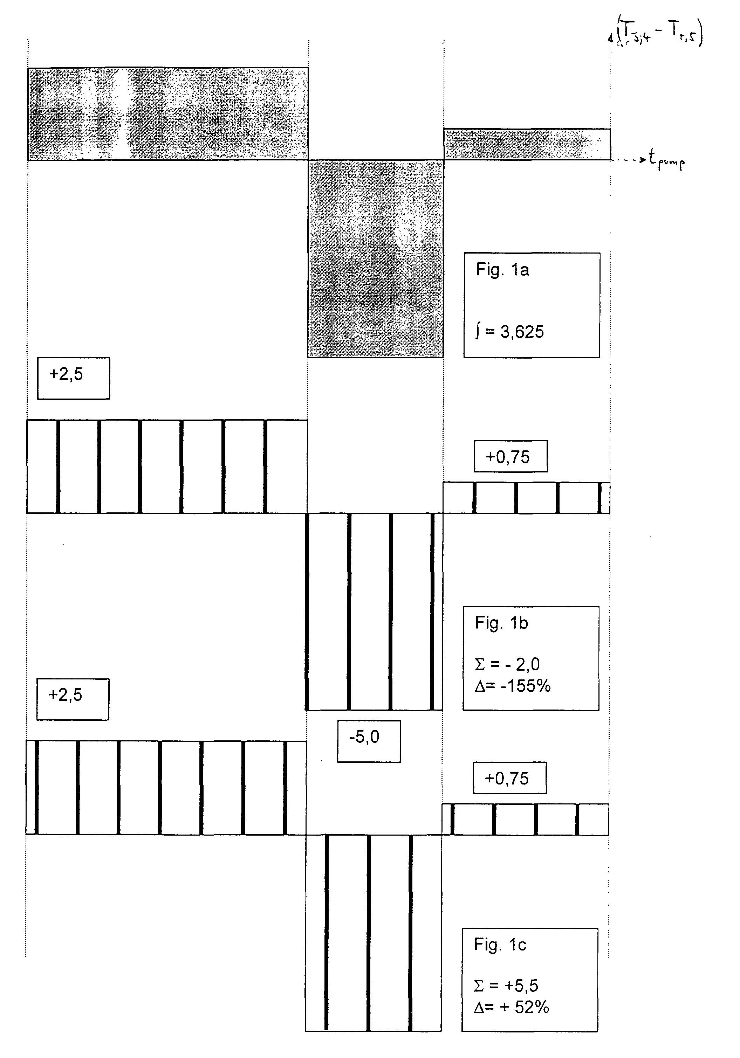

Zur Erläuterung dieser Probleme zeigen Fig. 1 einen Aufbau einer Anlage und Fig. 1a) eine inhomogene Temperaturverteilung, wie sie sich als Folge einer diskontinuierlichen Betriebes der Anlage ergeben kann. In Fig. 1a) ist auf der x-Achse eine Pumpzeit $t_{pump}$ und auf der y-Achse eine Differenztemperatur $T_{3;4} - T_{4;5}$ eingetragen, die eine Temperaturdifferenz zwischen den Temperaturen an Wärmetauschereingang und Wärmetauscherausgang ist, wobei als Bezugsgröße die Temperatur $T_{4;5}$ am Wärmetauscherausgang gewählt ist. Es sind Temperaturabweichungen nach oben und unten dargestellt. Anhand der Figuren 1b) und 1c) wird verdeutlicht, daß es abhängig von der Auflösung des Impulsgebers des Volumenstromgebers (entsprechend dem Abstand · der durch senkrechte schwarze Striche symbolisierten Impulse) und der Phasenlage der Impulse bei Beginn der Messung (entsprechend dem Abstand des ersten Impulses vom linken Rand der Abbildung) zu Abweichungen (Δ) d e s gemessenen Wertes (Σ) vom tatsächlichen Wert (Integral, ∫) kommen kann.

Es sind Verfahren bekannt, diese Abweichung durch eine höhere Auflösung des Impulsgebers im Volumenstromgeber aufzufangen. Die höhere Auflösung bedingt jedoch mechanisch und elektronisch aufwendigere Verfahren und folglich höhere Kosten. Die Unterschreitung des unteren Grenzwertes von ca. 20% des Nominal-Durchflusses bei kostengünstigen Volumenstrom-gebern führt in Verbindung mit viskosen Fluiden weiterhin zu relativ großen Meßfehlern.

Der Erfindung liegt die Aufgabe zugrunde, ein gattungsgemäßes Verfahren zu schaffen, das auf kostengünstige Weise eine hohe Genauigkeit bei der Bestimmung des Volumenstromes ermöglicht.

Diese Aufgabe wird gelöst durch ein Verfahren mit den Merkmalen von Anspruch 1. Vorteilhafte Weiterbildungen sind in den abhängigen Ansprüchen angegeben.

Gemäß der Erfindung erfolgt die Bestimmung der geförderten Wärmemenge durch Zuordnung des Volumenstroms zur Pumpenlaufzeit, wobei vorzugsweise eine elektronische Iteration mit hoher Auflösung erfolgt. Dies hat unter anderem die Vorteile, daß die Bestimmung des Volumenstroms

- mit geringem Kostenaufwand erfolgen kann
- ohne mechanisch bewegte Baugruppen erfolgen kann
- mit unendlich hoher Auflösung erfolgen kann.

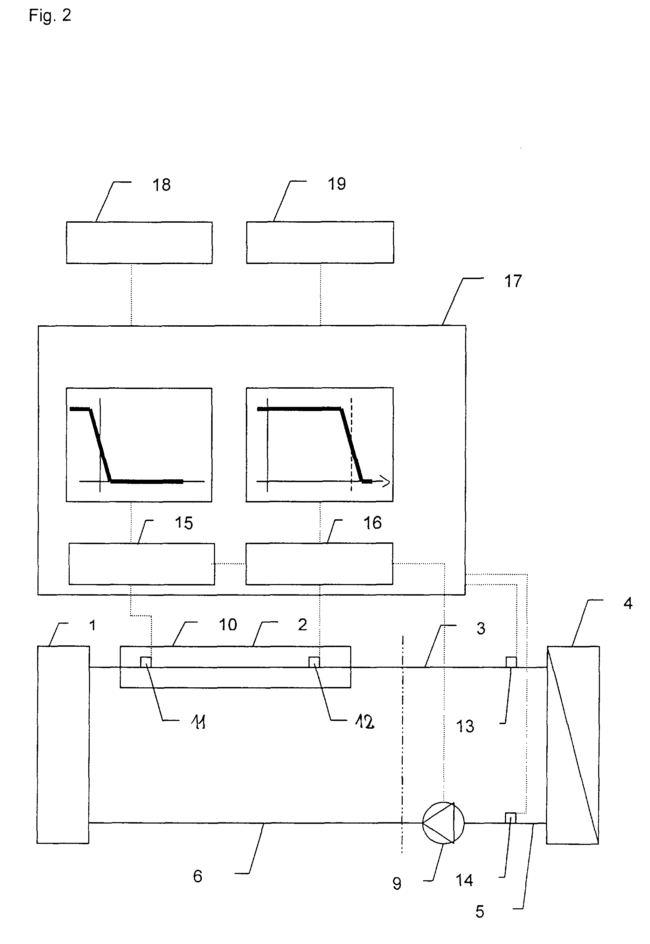

Nach einer vorteilhaften Ausgestaltung des Verfahrens, die anhand Fig. 2 erläutert wird, wird der Volumenstrom als Funktion der Pumpenlaufzeit über Fühler ermittelt, die die Laufzeit einer Temperaturflanke innerhalb einer Leitung bestimmen. Die Temperatur des Wärmeträgers einer Energiequelle (Energiesammler) wird dabei um einen bestimmten Wert über die Temperatur der Meßstrecke erhöht. Erreicht die Temperaturflanke (oder deren Wendepunkt) den durch einen Temperaturfühler 11 gegebenen vorderen Meßpunkt der Meßstrecke, wird der Laufzeitzähler der Fördereinrichtung auf Null gesetzt und beginnt zu zählen. In festen Zeitabschnitten werden gleichzeitig die zur Erfassung der Wärmemenge notwendigen Parameter erfaßt und gespeichert. Erreicht die Temperaturflanke (oder deren Wendepunkt) den durch einen Temperaturfühler 12 gegebenen hinteren Meßpunkt der Meßstrecke, wird die Laufzeit der Fördereinrichtung gespeichert. Diese Laufzeit wird dem Volumen der Meßstrecke zugeordnet. Durch elektronische Iteration kann der Volumenstrom als Funktion der Pumpenlaufzeit in beliebigen Intervallen dargestellt und den erfaßten Parametern zugeordnet (kalibriert) werden. Die Iteration mit unendlich vielen Iterationsschritten ergibt das darzustellende Integral.

Nach einer weiteren vorteilhaften Ausgestaltung des Verfahrens wird ein zur Abgabe von Impulsen ausgebildeter Volumenstromgeber verwendet und es wird die Meßstrecke als das zwischen zwei Impulsen des Volumenstromgebers liegende Volumen dargestellt. Der erste Zeitzähler der Fördereinrichtung wird bei Einschalten der Fördereinrichtung auf Null gesetzt und beginnt zu zählen. In festen .Zeitabschnitten werden gleichzeitig die zur Erfassung der Wärmemenge notwendigen Parameter erfaßt und gespeichert. Der zweite Zeitzähler der Fördereinrichtung wird beim ersten Impuls des Impulsgebers des Volumengebers gleichfalls auf Null gesetzt und beginnt zu zählen. Der zweite Impuls des Impulsgebers des Volumenstromgebers hält den zweiten Zeitzähler der Fördereinrichtung an. Die Laufzeit der Pumpe zwischen dem ersten und zweiten Impuls des Impulsgebers des Volumenstromgebers (Zeitmessung zweiter Zeitzähler) wird dem Nennvolumen pro Impuls des Volumenstromgebers zugeordnet. Durch elektronische Iteration kann der Volumenstrom als Funktion der Pumpenlaufzeit in beliebigen Intervallen dargestellt und den erfaßten Parametern zugeordnet (kalibriert) werden. Die Iteration mit unendlich vielen Iterationsschritten ergibt das darzustellende Integral.

Nach einer weiteren, vorteilhaften Ausgestaltung einer Vorrichtung zur Durchführung des Verfahrens wird zur Bestimmung des echten Fördervolumens ($dV/dt_e$) das gemessene Fördervolumen ($dV/dt_m$) mit einem temperaturabhängigen Korrekturfaktor multipliziert.

$$dV/dt_e = k\ dV/dt_m$$

und die echte Temperatur ($T_e$) des von einem fließenden, warmen Medium umströmten Temperaturfühlers bestimmt, indem man zum Fühlerausgangssignal die mit einem geeigneten Gewicht multiplizierte Änderungsgeschwindigkeit dieses Signals gemäß nahestehender Gleichung hinzuaddiert:

$$Te = T + w \times dT/dt$$

wobei w eine für den betrachteten Temperaturfühler charakteristische Korrekturkonstante ist.

Nach einer weiteren vorteilhaften Ausgestaltung einer Vorrichtung zur Durchführung des Verfahrens kann die ermittelte Wärmemenge zur Funktionskontrolle einer thermischen Solaranlage eingesetzt werden, indem die bestimmte, einem Wärmeverbraucher zugeführte Energie mit der Energie verglichen wird, die dem Wärmeverbraucher aufgrund der inneren Energie des Engergiesammlers und der Verbindungsleitungen, sowie des Wärmetauschers pro Ladezyklus zugeführt werden muß.

Nach einer weiteren vorteilhaften Ausgestaltung einer Vorrichtung zur Durchführung des Verfahrens ist die Energiequelle ein Strahlungskollektor, ein Wärmetauscher, Wärmerohre, eine Abwärmequelle oder ein exogener Produktionsprozeß; die Energiesenke ein Wärmeverbraucher, ein Wärmespeicher oder ein endogener Produktionsprozeß.

Weitere Vorteile und vorteilhafte Ausgestaltungen sind der nachfolgenden Beschreibung, der Zeichnung und den Ansprüchen entnehmbar.

Grundlagen der Erfindung und ein Ausführungsbeispiel sind in den Zeichnungen dargestellt und im folgenden näher beschrieben: Es zeigen

Fig. 1:     eine Darstellung des Systems zur Funktionsüberwachung und Wärmemengenerfassung einer thermischen Solaranlage

Fig. 1a     eine inhomogene Temperaturverteilung, wie sie sich als Folge eines diskontinuierliches Betriebes ergeben kann, wobei der Verlauf einer Temperaturdifferenz $T_{3;4}$ - $T_{4;5}$ als Funktion einer Pumpenlaufzeit $t_{pump}$ dargestellt ist. Die Temperatur $T_{4;5}$ ist die in erster Näherung konstante Bezugstemperatur (Abszisse).

Fig. 1b     eine Verteilung von Impulsen (senkrechte Striche) eines Volumenstromgebers mit endlicher Auflösung mit dem Startzeitpunkt $t_1$

Fig. 1 c     eine Verteilung gemäß Figur 1 b mit einem anderen Startzeitpunkt $t_2$.

In Figur 1 ist ein Wärmeerzeuger 1 dargestellt, der über Verbindungsleitungen 2;3 und eine darin befindliche Meßstrecke 10 sowie Verbindungsleitungen 5; 6 mit einem Wärmeverbraucher 7;8 verbunden ist. Der im Wärmeerzeuger 1 erwärmte Wärmeträger wird von der Fördereinrichtung 9 durch die Verbindungsleitung 2 mit darin enthaltenen Meßstrecke 10 und die Verbindungsleitung 3 in den im Wärmespeicher 7 befindlichen Wärmetauscher 4 gefördert. Dort tauscht er Wärme aus und kehrt über die Verbindungsleitungen 5 und 6 zum Wärmeerzeuger zurück, um, genügend Abwärme vorausgesetzt, wieder erwärmt zu werden.

Zunächst werden die eingangs dargestellten Probleme bei der Verwendung von Impuls-Volumenstromgebern mit endlicher Auflösung anhand Fig. 1 a bis 1 c erläutert. In einem abgeschlossenen Intervall wird also bspw. zunächst das Volumen des Wärmeträgers mit der in erster Näherung konstanten Temperatur $T_3$ des Leitungsabschnitts 3, sodann das Volumen des Wärmeträgers mit der in erster Näherung konstanten Temperatur $T_2$ des Leitungsabschnitts 2 und das Volumen des Wärmeträgers im Wärmeerzeuger mit der in erster Näherung konstanten Temperatur $T_1$ gefördert.

Figur 1a zeigt den Verlauf der Temperaturdifferenz $T_{3;4}$ - $T_{4;5}$ als Funktion der Pumpenlaufzeit. Die in der Abszisse dargestellte Zeit $t_{pump}$ ist proportional

den Volumen des Wärmeträgers in den Leitungen 3 und 2 sowie zum Volumen des Wärmeträgers im Wärmeerzeuger 1. Die Darstellung der Differenztemperatur Wärmetauschereingang minus Wärmetauscherausgang erfolgt für die in erster Näherung konstante Temperatur $T_{4;5}$ am Wärmetauscherausgang als Bezugsgröße. Das Intergral über die Randkurve entspricht der dem Wärmetauscher zugeführten Wärmemenge.

Figur 1b zeigt die über dieselbe Zeitachse $t_{pump}$ dargestellte Verteilung der Impulse eines Volumenstromgebers mit endlicher Auflösung mit dem Startzeitpunkt $t_1$. Die Bildung der Wärmemenge erfolgt nach diesem Verfahren durch Bildung der endlichen Summe von Produkten aus Temperaturdifferenz und Teilvolumen, gewichtet mit der spezifischen Wärmekapazität des Übertragungsmediums.

Figur 1c zeigt Figur 1b mit einem anderen Startzeitpunkt $t_2$.

Anhand Fig. 2 wird nun eine durch die Erfindung geschaffene Möglichkeit erläutert, ohne Verwendung eines Volumenstromgebers eine genaue Bestimmung des Volumenstroms durchführen zu können. Figur 2 zeigt die Einrichtung zur Bildung des Volumenstroms als Funktion der Pumpenlaufzeit, d. h. zur Eichung des Wärmemengenzählers. Nach Erreichen einer Temperatur $T_1$ des Wärmeerzeugers 1, die wesentlich größer als die Temperatur des Leitungsabschnitts 2 und der darin enthaltenen Meßeinrichtung 10 ist; schaltet die Pumpe 9 ein. Die Zeitzähler 15 und 16 werden zu Null gesetzt und beginnen zu zählen. Die Temperaturflanke des Wärmeträgerfluids und insbesondere deren den Verlauf kennzeichnende Größen wie bspw. die Steigung oder die Wendetangente werden aus dem Wärmeerzeuger 1 in die Leitung 2 gepumpt und erreichen nach einer unbestimmten Zeit t den Temperaturfühler 11. Der Zeitzähler 15 speichert die angelaufene Pumpzeit und gibt sie an das Rechenwerk weiter. Nach einer gewissen Zeit $T_m$ erreicht diese kennzeichnende Größe der Temperaturflanke den Temperaturfühler 12. Der Zeitzähler 16 wird angehalten und gibt die gespeicherte Zeit an das Rechenwerk weiter. Dieses berechnet aus den gemessenen Zeiten und dem über ein Bedienfeld eingegebenen Volumen der Meßstrecke den Volumenstrom als Funktion der Pumpenlaufzeit. Die Eichung der Wärmemengenmessers ist damit abgeschlossen.

Es ist auch möglich, daß ein zur Abgabe von Impulsen ausgebildeter Volumenstromgeber verwendet wird und daß zur Ermittlung des Volumenstroms als Funktion der Laufzeit der Fördereinrichtung ein zwischen zwei direkt oder mit Zwischenimpulsen aufeinander folgenden Impulsen gefördertes Nennvolumen mit einer zur Förderung des Nennvolumens erforderlichen Laufzeit der Fördereinrichtung korreliert wird. Hierzu kann wie folgt verfahren werden: Zunächst erfolgt ein Einschalten der Fördereinrichtung, bis mindestens zwei Impulse des Volumenstromgebers an eine Regeleinrichtung abgegeben werden. Es erfolgt eine Bestimmung der zwischen dem ersten und dem n-ten Impuls des Volumenstromgebers vergangenen Zeit. Anschließend erfolgt eine Bestimmung des Volumenstroms ($\Delta V / \Delta t$) durch Division des zwischen zwei bis n Impulsen gelegenen Volumens durch die zwischen diesen Impulsen liegende Laufzeit der Fördereinrichtung.

Im Betrieb der Anlage wird die Laufzeit der Pumpe mit einem weiteren Zeitzähler ermittelt und daraus gemäß o. a. Verfahren die geförderte Wärmemenge im Rechenwerk berechnet und über ein Anzeigefeld ausgegeben. Erfindungsgemäß erlaubt die elektronische Iteration die Pumpenlaufzeit in beliebig kleine Intervalle zu unterteilen und mit den gemessenen Temperaturdifferenzen sowie der spezifischen Wärmekapazität des Mediums die integrale Wärmemenge zu berechnen.

Alle in der Beschreibung, den nachfolgenden Ansprüchen und der Zeichnung dargestellten Merkmale können sowohl einzeln als auch in beliebiger Kombination miteinander erfindungswesentlich sein.

<u>Bezugszahlenliste</u>

| 1 | Energiesammler |
|---|---|
| 2;3 | Verbindungsleitung zwischen Ausgang des Energie sammlers und den Eingang des Wärmetauschers |
| 4 | Wärmetauscher |
| 5;6 | Verbindungsleitung zwischen Ausgang des Wärmetauschers und Eingang des Energiesammlers |
| 7 | Wärmespeicher |
| 8 | Gebäude |
| 9 | Fördereinrichtung |
| 10 | Meßstrecke |
| 11 | Temperaturfühler $T_a$ |
| 12 | Temperaturfühler $T_b$ |
| 13 | Temperaturfühler Wärmetauschereingang |
| 14 | Temperaturfühler Wärmetauschereingang |
| 15 | Zeitzähler 1 |
| 16 | Zeitzähler 2 |
| 17 | Rechenwerk |
| 18 | Bedienfeld |
| 19 | Anzeigefeld |

**Patentansprüche**

1. Verfahren zur Bestimmung einer mittels eines fluiden Wärmeträgers mit Hilfe einer Fördereinrichtung durch ein Leitungssystem geförderten und/oder an einen Verbraucher abgegebenen Wärmemenge, insbesondere zur Funktionsüberwachung thermischer Solaranlagen, bei dem die Wärmemenge aus einer Funktion ermittelt wird, die das Produkt eines Volumenstromes und einer Temperaturdifferenz in dem Leitungssystem, gewichtet mit der spezifischen Wärmekapazität des Wärmeträgers, enthält, dadurch gekennzeichnet, daß zunächst für das Leitungssystem eine Eichung der Wärmemengenmessung durch Ermittlung des Volumenstromes als Funktion der Laufzeit der Fördereinrichtung durchgeführt wird und daß im Betrieb der Volumenstrom aus der Laufzeit der den Wärmeträger durch das Leitungssystem fördernden Fördereinrichtung abgeleitet wird.

2. Verfahren nach Anspruch 1, dadurch gekennzeichnet, daß bei der Eichung zur Ermittlung des Volumenstroms als Funktion der Laufzeit innerhalb einer Meßstrecke zwischen zwei voneinander beabstandeten Temperaturfühlern bei eingeschalteter Fördereinrichtung eine Laufzeit einer in dem Wärmeträger vorliegenden Temperaturflanke zwischen den Temperaturfühlern bestimmt wird und daß die Laufzeit dem Volumen der Meßstrecke zugeordnet wird, wobei vorzugsweise als eine die Temperaturflanke kennzeichnende Größe deren Steigung oder deren Wendetangente verwendet wird und/oder wobei Parameter zur Ermittlung des Volumens der Meßstrecke vorgegeben werden, insbesondere über ein Bedienfeld eingegeben werden.

3. Verfahren nach Anspruch 2, dadurch gekennzeichnet, daß aus einer gemessenen Laufzeit einer Temperaturflanke zwischen den Temperaturfühlern eine temperaturabhängige, eine Verschleppung der Temperaturflanke berücksichtigende theoretische Laufzeit bestimmt wird, die kleiner oder gleich der gemessenen Laufzeit ist, und daß die theoretische Laufzeit zur Ermittlung des Volumenstroms herangezogen wird.

4. Verfahren nach Anspruch 2 oder 3, dadurch gekennzeichnet, daß zur Erzeugung einer Temperaturflanke die Temperatur des Wärmeträgers stromaufwärts einer die Temperaturfühler umfassenden Meßstrecke durch Abschalten der Fördereinrichtung über eine mittlere Temperatur der Meßstrecke erhöht wird.

5. Verfahren nach einem der vorhergehenden Ansprüche, dadurch gekennzeichnet, daß bei der Eichung ein zur Abgabe von Impulsen ausgebildeter Volumenstromgeber verwendet wird und das zur Ermittlung des Volumenstroms als Funktion der Laufzeit ein zwischen zwei Impulsen des Volumenstromgebers gefördertes Nennvolumen mit einer zur Förderung des Nennvolumens erforderlichen Laufzeit der Fördereinrichtung korreliert wird.

6. Verfahren nach Anspruch 5, dadurch gekennzeichnet, daß zur Ermittlung des Volumenstroms als Funktion der Laufzeit bei · laufender Fördereinrichtung die Zeit zwischen zwei direkt oder mit Zwischenimpulsen aufeinanderfolgenden Impulsen des Volumenstromgebers gemessen wird.

7. Verfahren nach einem der vorhergehenden Ansprüche, dadurch gekennzeichnet, daß zur Bestimmung der geförderten Gesamtwärmemenge folgende Schritte durchgeführt werden:

- Ermittlung der absoluten Temperatur (in Kelvin) des Wärmeträgers in einem beliebigen Punkt der Verbindungsleitungen in einer Zeiteinheit;
- Ermittlung einer pro Zeiteinheit geförderten Wärmemenge durch Bildung eines Produktes des aus dem Volumenstrom errechneten, geförderten Volumens mit einer temperaturabhängige spezifischen Wärmekapazität und der für die Zeiteinheit ermittelten Temperatur; und
- Bildung der Summe der für die Zeiteinheiten ermittelten Wärmemengen über die gesamte Laufzeit der Fördereinrichtung.

8. Vorrichtung zur Bestimmung einer mit Hilfe einer Fördereinrichtung mittels eines fluiden Wärmeträgers durch ein Leitungssystem geförderten und/ oder an einen Verbraucher abgegebenen Wärmemenge, insbesondere zur Funktionsüberwachung thermischer Solaranlagen, mit

- einer Fördereinrichtung (9) zur Förderung des Wärmeträgers in einem geschlossenen hydraulischen System, bestehend aus mindestens einem Wärmeerzeuger (1), einer Verbindungsleitung (2; 3) mit einer Meßstrecke (10), einem Wärmeverbraucher (4) und einer die Fördereinrichtung enthaltenden Verbindungsleitung (5; 6), sowie mit Temperaturfühlern (11, 12) für Temperaturen ($T_a$, $T_b$) in der Meßstrecke (10);
- mit einem ersten Zeitzähler (15) und einem zweiten Zeitzähler (16) zur Überwachung der Laufzeit der Fördereinrichtung (9);
- mit einer Regeleinrichtung mit Einrichtungen zum Ermitteln und Darstellen des Temperaturverlaufs, insbesondere des Wendepunkts einer Temperaturflanke am Ort des ersten Temperaturfühlers (11) der Meßstrecke (10) als Funktion der Pumpenlaufzeit und zum Ermitteln und Darstellen des Temperaturverlaufs, insbesondere des Wendepunkts einer Temperaturflanke am Ort des zweiten Temperaturfühlers (12) der Meßstrecke (10) als Funktion der Pumpenlaufzeit;
- mit Einrichtungen zur Bestimmung der Laufzeit der Temperaturflanke zwischen den Temperaturfühlern (11) und (12) der Meßstrecke (10);
- mit einer Einrichtung zur Bestimmung des Volumens ($V_{ab}$) der Meßstrecke (10) zwischen den Temperaturfühlern (11) und (12) aus eingegebenen Parametern;

- mit Einrichtungen zur Bestimmung des Volumenstroms aus dem Quotient eines ermittelten Volumens der Meßstrecke geteilt durch die ermittelte Laufzeit der Fördereinrichtung (9);
- und mit Einrichtungen zur Zuordnung des ermittelten Volumenstroms zur Laufzeit der Fördereinrichtung (9) in einem Zeitintervall durch elektronische Iteration.

9. Vorrichtung nach Anspruch 8, dadurch gekennzeichnet, daß der Wärmeerzeuger (1) ein thermischer Solarkollektor ist, daß der Wärmespeicher (7) sensible, d.h. fühlbare und/oder latente Wärme speichert und daß der Wärmeträger ein Fluid, z.B. ein Wasser-Glykol-Gemisch, ist.

**Claims**

1. Procedure for determination of a quantity of heat delivered by means of a heat transfer fluid assisted by a conveying means via a line system and/or emitted to a consumer, especially for operational check of thermal solar installations, in which the quantity of heat is determined from a function which comprises the product of a volume flow and a temperature difference in the line system, weighted with the specific heat capacity of the heat transfer medium, characterized in that first of all a calibration of the measured quantity of heat of the line system is effected by detection of the volume flow as a function of the operating time of the conveying means and that during operation the volume flow is derived from the operating time of the conveying means which transports the heat transfer medium through the line system.

2. Procedure according to claim 1, characterized in that during the calibration for determination of the volume flow as a function of the operating time inside a measured length between two temperature probes placed in a certain distance one from the other, when the conveying means is on, an operating time of a temperature edge existing in the heat transfer medium between the temperature probes is determined and that the operating time is assigned to the volume of the measured length, whereby preferably as characterizing value for the temperature edge its ascending gradient or its inflectional tangent is used and/or whereby parameters for determination of the volume of the measured length are preset, especially via an operating panel.

3. Procedure according to claim 2, characterized in that from a measured operating time of a temperature edge between the temperature probes a temperature dependent theoretical operating time, considering a displacement of the temperature edge, is determined, which is less or equal to the measured operating time and that the theoretical operating time is called-on for determination of the volume flow.

4. Procedure according to claim 2 or 3, characterized in that for generation of a temperature edge the temperature of the heat transfer medium is increased when it flows upwards in a measured length comprising the temperature probes by switching-off the conveying means by means of a central temperature of the measured length.

5. Procedure according to one of the before mentioned claims, characterized in that for calibration a volume flow transmitter designed for emission of impulses is used and that the nominal volume delivered between two impulses of the volume flow transmitter for determination of the volume flow as a function of the operating time is correlated with an operating time of the conveying means necessary for supplying the nominal volume.

6. Procedure according to claim 5, characterized in that for determination of the volume flow as a function of the operating time, when the conveying means is in operating condition, the time between two impulses in direct succession or between intermediate impulses of the volume flow transmitter are measured.

7. Process according to one of the claims mentioned before, characterized in that for determination of the total quantity of heat delivered the following steps are carried out:

- Determination of the absolute temperature (in Kelvin) of the heat transfer medium at any point of the connection lines you like in one time unit;
- Determination of a quantity of heat delivered one time unit by formation of a product from the volume delivered calculated from the volume flow with a temperature dependent specific heat capacity and the temperature determined for the time unit; and
- Formation of the sum for the quantities of heat detected for the time units over the total operating time of the conveying means.

8. Device for determination of a quantity of heat delivered with help of a conveying means by means of a heat transfer fluid via a line system and/or discharged to a consumer, especially for monitoring thermal solar installations, comprising

- a conveying means (9) for delivery of the heat transfer medium in a closed hydraulic system, comprising at least one heat generator (1), one connection line (2; 3) with a measured length (10), a heat consumer (4) and a connection line (5; 6) comprising the conveying means, as well as temperature probes (11, 12) for temperatures ($T_a$, $T_b$) in a measured length (10);

- a first time counter (15) and a second time counter (16) for control of the operating time of the conveying means (9);

- a control unit equiped for determination and representation of the temperature course, especially of the turning point of a temperature edge at the first temperature probe (11) of the measured length (10) as a function of the pump operating time and for determination and representation of the temperature course, especially of the turning point of a temperatur edge at the second temperature probe (12) of the measured length (10) as a function of the pump operating time;

- with devices for determination of the operating time of the temperature edge between the temperature probes (11) and (12) of the measured length (10);

- a device for determination of the volume ($V_{ab}$) of the measured length (10) between the temperature probes (11) and (12) from entered parameters;

- with devices for determination of the volume flow from the quotient of a detected volume of the measured length, divided by the detected operating time of the conveying means (9);

- and with devices for assignment of the detected volume flow to the operating time of the conveying means (9) in one time interval by electronic iteration.

9. Device according to claim 8, characterized in that the heat transfer medium (1) is a thermal solar collector, the heat accumulator (7) stores sensible and/or latent heat and the heat transfer medium is a fluid, for example a water-glycol-mixture.

**Revendications**

1. Processus pour la détermination d'une quantité de chaleur donnée par l'intermédiaire d'un transporteur calorifique fluide avec l'aide d'un transporteur à travers un système de canalisation transporté et/ou vers un récepteur, particulièrement pour le contrôle fonctionnel d'installations solaires thermiques, où la quantité de chaleur est calculée à partir d'une fonction qui contient le produit d'un courant volumétrique et une différence de température dans le système de canalisation pondéré avec la capacité calorifique spécifique du transporteur de chaleur, par là caractérisé que d'abord un étalonnage de mesure de quantité de chaleur est effectué pour le système de canalisation par la détermination du courant volumétrique en tant que fonction du temps de parcours du transporteur et que, le courant volumétrique est déduit du temps de parcours du transporteur convoyant le transmetteur de chaleur à travers le système de canalisation, pendant le fonctionnement.

2. Procédé d'après le titre 1, caractérisé par le fait que lors de l'étalonnage pour la détermination du courant volumétrique en tant que fonction du temps de parcours à l'intérieur d'une section mesurée entre deux détecteurs de température situés à une certaine distance l'une de l'autre dans le cas d'un transporteur mis en marche, un temps de parcours est déterminé d'un flanc de température dont il est question dans le transporteur calorifique entre les détecteurs de température et que le temps de parcours est classé dans le volume de la section mesurée où il est de préférence utilisé comme une grandeur qui caractérise le flanc de température dont la montée ou dont la tangente hélicoïdale est utilisé et /ou où les paramètres pour la détermination du volume de la section mesurée sont donnés, particulièrement à travers un tableau de commande.

3. Procédé d'après le titre 2, caractérisé par le fait que, à partir d'un temps de parcours mesuré d'un flanc de température entre les détecteurs de température, une dépendance de température, un retardement du flanc de température prenant en considération le temps de parcours théorique est déterminé, qui est inférieur ou égal au temps de parcours mesuré, et que le temps de parcours théorique pour la détermination du courant est mis à contribution.

4. Procédé suivant le titre 2 ou 3, caractérisé par le fait que pour la production d'un flanc de température, la température du transporteur de chaleur, en amont du courant, d'une section mesurée contenant les détecteurs de température par le débranchement du transporteur à travers une température moyenne de la section mesurée, est augmentée.

5. Procédé suivant un des titres précédant, caractérisé par le fait qu'un transmetteur de courant volumique formé pour l'émission d'impulsion lors de l'étalonnage et que pour la détermination du courant volumique en tant que fonction du temps de parcours, un volume nominal transporté entre deux impulsions du transmetteur de courant volumique est corrélé avec un temps de parcours requis du transporteur pour le transport du volume nominal.

6. Procédé d'après le titre 5, caractérisé par le fait que le temps est mesuré pour la détermination du courant volumique en tant que fonction du temps de parcours lors du transport effectif entre deux impulsions successives ou avec des impulsions intermédiaires du transmetteur de volume.

7. Procédé suivant un des titres précédents, caractérisé par le fait que les étapes suivantes seront exécutées pour la détermination de la quantité totale de chaleur transportée

   - détermination de la température absolue(en Kelvin) du transmetteur de chaleur en un point choisi des canalisations de fonction en une unité de temps ;
   - détermination de la quantité de chaleur transportée par unité de temps à travers la formation d'un produit de volume calculé avec une capacité de chaleur spécifique dépendant de la température et de la température déterminée pour l'unité de temps et
   - formation d'une somme de quantité de chaleur déterminée pour les unités de temps de parcours total du transporteur

8. Dispositif pour la détermination de la quantité de chaleur transportée avec l'aide d'un transporteur se servant d'un transmetteur de chaleur fluide à travers un système de canalisation et/ou une quantité de chaleur donnée vers un récepteur, particulièrement pour le contrôle fonctionnel des installations solaires thermiques avec

   - un transporteur (9) pour le transport de transmetteur de chaleur dans un système hydraulique fermé, composé d'au moins un générateur de chaleur(1) une canalisation de jonction (2: 3) avec une section mesurée (10), un consommateur de chaleur (4) et une canalisation de jonction contenant le transporteur (5, 6,) ainsi qu'avec le détecteur de température (11,12) pour les
   - températures ($T_a$, $T_b$) déterminées dans la section mesurée (10);
   - avec un premier compteur de temps de fonctionnement (15) et un deuxième compteur de temps de fonctionnement (16) pour le contrôle du temps de parcours du transporteur (9)
   - avec un système régulateur ayant un dispositif pour la détermination et la présentation de la variation de température, particulièrement du point d'inflexion du flanc de température là où est placé le premier détecteur de température (11) de la section mesurée (10) en tant que fonction due temps de pompage et pour la détermination et la présentation de la variation de température, en particulier du point d'inflexion du flanc de température à l'endroit du deuxième détecteur de température (12) de la section mesurée(10) en tant que fonction du temps de pompage :

   - avec un dispositif pour la détermination du temps de parcours du flanc de température entre les détecteurs (11) et (12) de la section mesurée (10):
   - avec un dispositif pour la détermination du volume ($V_{ab}$) de la section mesurée (10) entre les détecteurs de température (11) et (12) à partir des paramètres donnés
   - avec un dispositif pour la détermination du courant volumique à partir du quotient d'un volume déterminé de la section mesurée divisée par le temps de parcours déterminé du transporteur (9):
   - et avec un dispositif pour le classement du courant volumétrique déterminé pour le temps de parcours du transporteur (9) dans un intervalle de temps à travers une itération électronique

9. Dispositif suivant le titre 8 caractérisé par le fait que le générateur de courant (1) est un collecteur solaire thermique, que l'accumulateur de chaleur (7) est sensible c.a.d. sensible à la chaleur et/ou accumule de la chaleur latente et que le transmetteur de chaleur est un fluide, par ex. un mélange d'eau et de glycol.

Fig. 1

$4(T_{3;4} - T_{r,5})$

$\cdots \to t_{pump}$

Fig. 1a

$\int = 3,625$

+2,5

+0,75

Fig. 1b

$\Sigma = -2,0$
$\Delta = -155\%$

+2,5

-5,0

+0,75

Fig. 1c

$\Sigma = +5,5$
$\Delta = +52\%$

Fig. 2